# EUROPÄISCHE PATENTSCHRIFT

(11) **EP 0 640 457 B1**
(45) Veröffentlichungstag und Bekanntmachung des Hinweises auf die Patenterteilung: **06.05.1998**
(21) Anmeldenummer: 94113195.5
(22) Anmeldetag: 24.08.1994
(51) Int. Cl.: B29C 45/26, B29C 45/44

(54) **Verfahren zum Entformen von Hohlkörpern mit Innenhinterscheidungen und Spritzgiesswerkzeug zur Durchführung dieses Verfahrens**
Method for ejecting hollow bodies with internal undercuts and injection mould for carrying out this method
Procédé pour démouler des corps creux à contre-dépouilles internes et moule d'injection pour la mise en oeuvre de ce procédé

(30) Priorität: 24.08.1993 DE 4328377
(43) Veröffentlichungstag der Anmeldung: 01.03.1995
(73) Patentinhaber: Rudolf Riedel GmbH, D-58579 Schalksmühle (DE)
(72) Erfinder: Baukloh, Horst, D-58540 Meinerzhagen (DE); Beer, Klaus, D-58515 Lüdenscheid (DE)
(74) Vertreter: Hassler, Werner, Dr.

(56) Entgegenhaltungen:
- AU-B- 559 771
- DE-A- 2 619 064
- DE-B- 1 114 027
- FR-A- 2 281 535
- GB-A- 2 169 844
- PATENT ABSTRACTS OF JAPAN vol. 12, no. 208 (M-709) 15. Juni 1988 & JP-A-63 011 313 (NIPPON SPINDLE MFG. CO. LTD.)
- KUNSTSTOFFE, Bd.83, Nr.2, Februar 1993, MUNCHEN DE Seiten 97 - 99 HORNIG 'Zweifach-Drehkernwerkzeug für einen Leitungskrümmer'

## Beschreibung

Das technische Gebiet der Erfindung ist das Entformen von bogenförmigen Hohlkörpern aus Kunststoff mit einer Innenhinterschneidung an einem Ende des Hohlkörpers.

Die Erfindung bezieht sich ferner auf ein Spritzgießwerkzeug für bogenförmige Hohlkörper aus Kunststoff mit einer Innenhinterschneidung an einem Ende des Hohlkörpers.

Zur Formung von Hinterschneidungen in zylindrischen Teilen ist aus der DE-PS 26 19 064 ein Faltkern der gattungsgemäßen Art bekannt. Damit lassen sich jedoch nur in Hohlkörpern mit gerader Achse insbesondere in zylindrischen Hohlkörpern Hinterschneidungen formen.

In DE-Z: Kunststoffe 1993, Heft 2, Seiten 97-99 ist ein Spritzgießwerkzeug für bogenförmige Hohlkörper aus Kunststoff mit einem um eine Schwenkachse eines Kernrahmens schwenkbaren Kernblock, an dem ein zu der Schwenkachse konzentrischer Bogenkern sitzt, beschrieben, der sich im Spritzzustand mit einem geraden, ein- und ausfahrbaren Kernstück zum eigentlichen Spritzkern ergänzt. Der Kernblock ist in einer bogenförmigen Kammer mit Hilfe einer geraden Schrägsäule verschiebar. Aufgrund der geometrischen Verhältnisse sind nur vergleichsweise kleine Bogenwinkel ausführbar, über die die Bogenbahn des Kernblocks keine großen Abweichungen von der geraden Bahn der Schrägsäule aufweist. Außerdem ist eine Formung von Innenhinterschneidungen nicht möglich.

Aufgabe der Erfindung ist die Bereitstellung eines Spritzgießwerkzeugs, das die Herstellung von bogenförmigen Hohlkörpern mit großem Bogenwinkel von wesentlich mehr als 45° mit einer Innenhinterschneidung am Stirnende des Bogens erlaubt.

Diese Aufgabe wird nach der Erfindung durch die Merkmale des Anspruchs 1 gelöst.

Die Erfindung unterscheidet sich insofern vom Stand der Technik, als auf einem Kernrahmen ein Kernblock schwenkbar angeordnet ist. Der Kernblock umfaßt einerseits eine gerade Kernführung und andererseits einen anschließenden Bogenkern. Auf der geraden Kernführung ist ein Kernrohr eines Faltkerns unabhängig von der Verschwenkung des Kernblocks linear verschiebbar, so daß die Entformung der Innenhinterschneidung möglich ist.

Zur sicheren Entformung des Spritzgußteils ist vorgesehen, daß der Kernrahmen in Öffnungsrichtung des Spritzgießwerkzeugs verschiebbar ist.

Zur Verschwenkung des Kernrahmens ist eine druckmittelbetätigte Zylindereinheit vorgesehen.

Eine einwandfreie Entformung ist dadurch gesichert, daß an dem Kernrahmen eine Abstreiferplatte angeordnet ist, durch deren Durchgang der Faltkern hindurchreicht.

Ein Ausführungsbeispiel wird anhand der Zeichnungen erläutert, in denen darstellen:
Fig. 1 eine Ansicht des Kernrahmens mit der Gegenformplatte,
Fig. 2 eine Seitenansicht des gesamten Werkzeugs, jeweils in der Einspritzstellung,
Fig. 3 und 4 entsprechende Darstellungen mit gezogenem Faltkern,
Fig. 5 den vollständigen Entformungszustand mit geschwenktem Kernrahmen.

In den Figuren sind die Führungsstangen 1 der Spritzgußmaschine dargestellt, auf denen die düsenseitige Aufspannplatte 2 und die auswerferseitige Gegenaufspannplatte 3 geführt sind. Auf den Aufspannplatten 2 und 3 sitzen jeweils die düsenseitge Formplatte 8 beziehungsweise die Gegenformplatte 9. Weitere Einzelheiten der Spritzgußmaschine und des Werkzeugaufbaus sind nicht dargestellt.

In den Figuren ist schematisch in der Gegenformplatte 9 die Formkammer 4 für einen bogenförmigen Hohlkörper 5 dargestellt. Der Hohlkörper 5 umfaßt einen Kreisbogenabschnitt 6 mit stirnseitigen Innenhinterschneidungen und einen geraden, zylindrischen Endabschnitt 7.

Die Formung des geraden Endabschnitts erfolgt mit Hilfe eines geradlinig geführten Kernstücks 11. Das Kernstück 11 wird von einem Zylinder 11 betätigt, der an der Gegenaufspannplatte 3 sitzt.

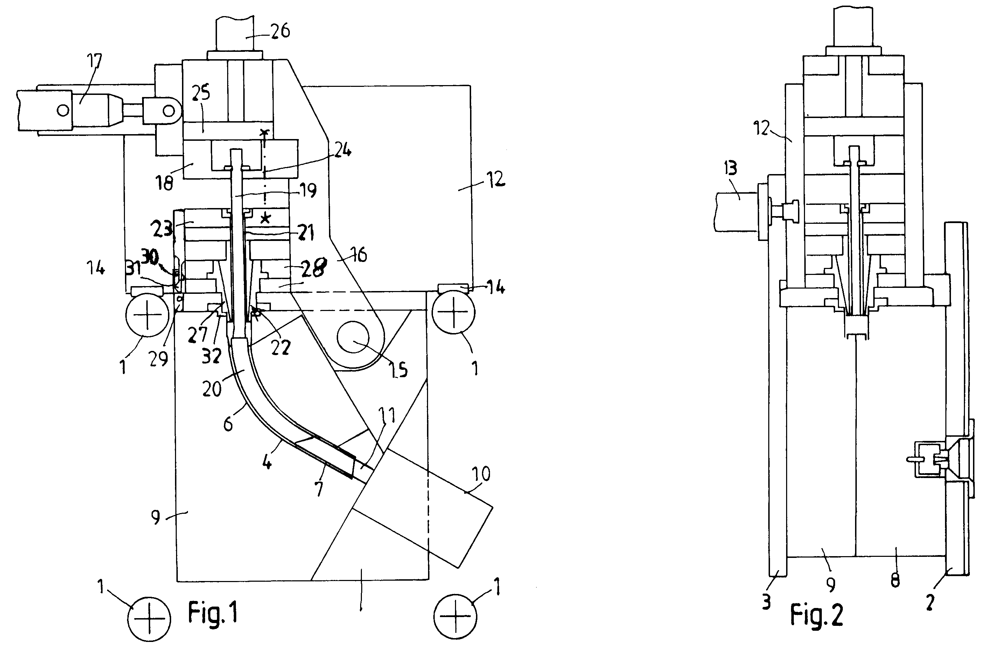

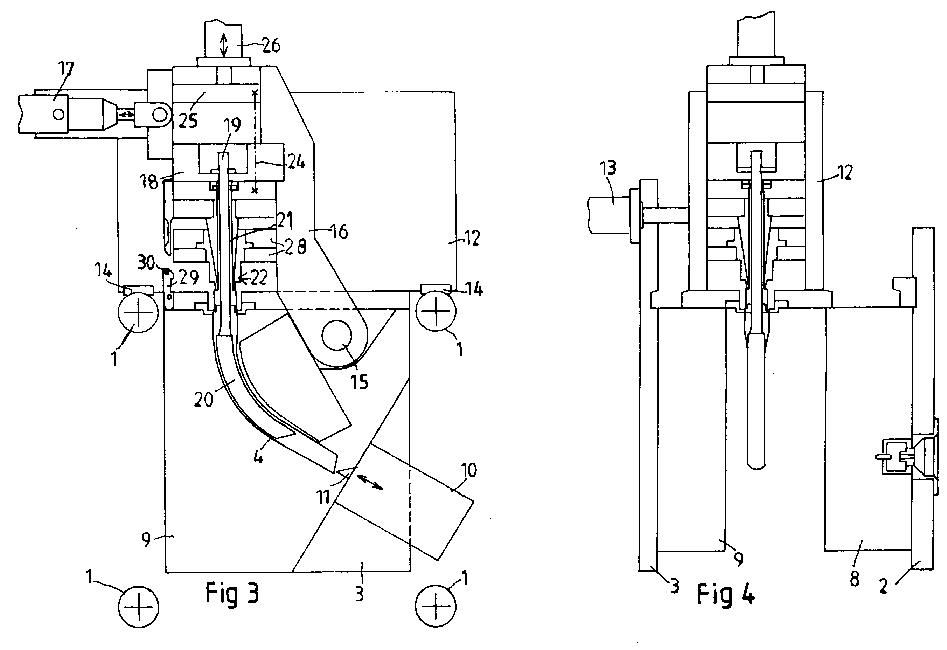

Die Kernteile zur Formung des Bogenabschnitts 6 und der Hinterschneidungen sitzen in einem besonderen Kernrahmen 12, der an der Gegenaufspannplatte 3 durch einen Zylinder 13 und nicht dargestellte Führungsbuchsen gehalten und geführt ist. Der Zylinder 13 ermöglicht Bewegungen des Kernrahmens 12 in Öffnungsrichtung des Werkzeugs. Der Kernrahmen 12 stützt sich mit Gleitführungen 14 auf den Führungsstangen 1 der Spritzgußmaschine ab. Eine Schwenkachse 15 des Kernrahmens 12 trägt einen Kernblock 16, der durch eine Zylindereinheit 17 in Uhrzeigerrichtung bezogen auf Fig. 1 und 3 geschwenkt werden kann.

An einer Aufnahmeplatte 18 des Kernblocks 16 sitzt eine gerade Kernführung 19 und anschließend ein Bogenkern 20, dessen Bogen konzentrisch zur Schwenkachse 15 ausgerichtet ist und der die Innenfläche des Bogenabschnitts 6 formt. Im Schließzustand des Werkzeugs nach Fig. 1 schließt die Stirnfläche des Bogenkerns 20 mit einer schrägen Stoßfläche an das Kernstück 11 an.

Auf der geraden Kernführung 19 ist ein Kernrohr 21 eines Faltkerns 22 linear verschiebbar angeordnet. Das Kernrohr 21 sitzt in einer Aufnahme 23, die durch schematisch eingezeichnete Koppelstangen 24 mit einem Kolbenkopf 25 einer Zylindereinheit 26 verbunden ist. Die Zylindereinheit 26 dient zur Linerarverschiebung des Faltkerns. Das Kernrohr 21 weist zwei Gruppen von je drei Flächen auf, wobei der Neigungswinkel der Flächen der einen Gruppe zur Kernachse von dem Neigungswinkel der anderen Gruppe verschieden ist, wie dies bei Faltkernen bekannt ist. Auf den geneigten Flächen des Kernrohrs 21 sitzen Faltsegmente 27, die mit Mitnehmern in Gleitplatten 28 eingreifen und durch die Gleitplatten 28 in axialer Richtung geführt werden. Die Faltsegmente 27 formen in bekannter Weise Innenprofile von Hinterschneidungen. Zwei Gruppen von je drei Faltsegmenten sind aus konstruktiven Gründen zweckmäßig. Jedoch kann man auch eine andere Anzahl von Faltsegmenten vorsehen.

An der Gegenformplatte 9 ist ein entgegen einer Vorspannung schwenkbarer Rasthaken 29 angeordnet, der mit einer Rastnase an der Gleitplatte 28 zusammenwirkt. Außerdem liegt eine Führungsrolle 30 des Rasthakens 29 an einer Profilkurve 31 an, die mit der Aufnahme 23 verbunden ist. Der Rasthaken 29 hält in der Schließstellung oder Einspritzstellung des Werkzeugs gemäß Fig. 1 die Gleitplatte 28 fest, so daß die Faltsegmente 27 des Faltkerns festgehalten werden. Auch während der Öffnung des Werkzeugs werden die Gleitplatte 28 und die Faltsegmente 27 festgehalten, damit die Faltsegmente sicher eingefaltet werden.

Ein Stirnring der Formkammer ist an dem Kernrahmen 12 befestigt und dient als Abstreiferplatte 32. Die Abstreiferplatte 32 ist zusammen mit der Kernrahmen 12 in Öffnungsrichtung des Werkzeugs verschiebbar. Die Kernteile enthalten in üblicher Weise Kühlkanäle, die im Einzelnen nicht dargestellt sind.

Die Arbeitsweise des Spritzgießwerkzeugs ist folgende: In der Spritzstellung nach den Fig. 1 und 2 ist der Kernblock in Gegenuhrzeigerrichtung bis an einen Anschlag geschwenkt, die Zylindereinheit 26 schiebt das Kernrohr 21 nach unten bezogen auf Fig. 1, so daß der Faltkern gespreizt ist und entfaltet in der Formkammer liegt. Die Formkammer wird über die Düse gefüllt.

Nach Ablauf der erforderlichen Standzeit wird das Kernrohr 21 teilweise gezogen, so daß der Faltkern teilweise entformt wird. Die Formhälften werden geöffnet. Das zylindrische Kernstück 11 wird gezogen. Der Kernrahmen 12 wird in axialer Richtung verfahren, vergleiche Fig. 4, so daß der Hohlkörper 5 von der Gegenformplatte 9 ebgehoben wird.

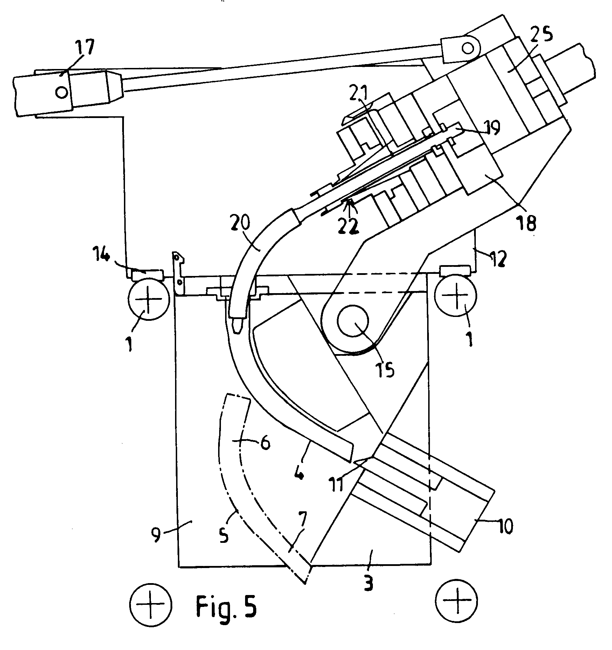

Anschließend wird das Kernrohr vollständig zurückgezogen, so daß der Faltkern völlig zusammenfällt und eine Entformung ermöglicht. Schließlich wird der Kernblock 16 in Uhrzeigerrichtung in die Stellung nach Fig. 5 geschwenkt. Dabei wird der Bogenkern 20 völlig gezogen und der Hohlkörper an der Abstreiferplatte 32 abgestreift, so daß er entnommen werden kann.

## Patentansprüche

1. Verfahren zum Entformen von bogenförmigen Hohlkörpern aus Kunststoff mit einer Innenhinterschneidung an einem Ende des Hohlkörpers, wonach ein auf einer geraden Kernführung (19) geführter Faltkern (22) zur Formung der Innenhinterschneidung, der aus 2 Gruppen von je n Faltsegmenten (27) besteht, die auf einem Kernrohr (21) unter unterschiedlichen Winkeln zur Kernachse geführt sind und sich im Spritzzustand ergänzen, in gefalteten Zustand zur Entformung der Innenhinterschneidung gebracht wird, wonach anschließend die Kernführung (19) mit einem anschließenden Bogenkern um das Krümmungszentrum des Bogenkerns verschwenkt wird und wonach ein gerades, den Bogenkern ergänzendes Kernstück (11) ausgezogen wird.

2. Spritzgießwerkzeug für bogenförmige Hohlkörper (5) aus Kunststoff mit einer Innenhinterschneidung an einem Ende des Hohlkörpers, mit einem Faltkern (22) zur Formung der Innenhinterschneidung, wobei der Faltkern aus 2 Gruppen von je n Faltsegmenten (27) besteht, die auf einem Kernrohr (21) unter unterschiedlichen Winkeln zur Kernachse geführt sind, sich im Spritzzustand ergänzen und im gefalteten Zustand ein Entformen der Hinterschneidung erlauben, mit einem um eine Schwenkachse (15) eines Kernrahmens (12) schwenkbaren Kernblock (16), an dem anschließend an eine gerade Kernführung (19), auf der das Kernrohr (21) des Faltkerns (22) verschiebbar ist, ein zu der Schwenkachse (15) konzentrischer Bogenkern (20) angebracht ist, der sich im Spritzzustand mit einem geraden, ein- und ausfahrbaren Kernstück (11) zum eigentlichen Spritzkern ergänzt.

3. Spritzgießwerkzeug nach Anspruch 2, dadurch gekennzeichnet, daß der Kernrahmen (12) in Öffnungsrichtung des Spritzgießwerkzeugs verschiebbar ist.

4. Spritzgießwerkzeug nach Anspruch 2 oder 3, dadurch gekennzeichnet, daß zur Verschwenkung des Kernrahmens (12) eine druckmittelbetätigte Zylindereinheit (17) vorgesehen ist.

5. Spritzgießwerkzeug nach einem der Ansprüche 2 bis 4, dadurch gekennzeichnet, daß an dem Kernrahmen (12) eine Abstreiferplatte (32) angeordnet ist, durch deren Durchgang der Faltkern hindurchreicht.

## Claims

1. A process for demoulding curved hollow bodies of plastics material having an internal undercut at one end of the hollow body, according to which a collapsible core (22), which is intended for moulding the internal undercut, is guided on a straight core guide (19) and comprises two groups of in each case n collapsible segments (27) which are guided on a core tube (21) at different angles to the core axis and complement one another in the injection condition, is made to demould the internal undercut in the collapsed condition, according to which the core guide (19) is then pivoted with an adjoining curved core about the centre of curvature of the curved core, and according to which a straight core piece (11) supplementing the curved core is withdrawn.

2. An injection mould for curved hollow bodies (5) of plastics material having an internal undercut at one end of the hollow body, having a collapsible core (22) for moulding the internal undercut, the collapsible core (22) comprising two groups of in each case n collapsible segments (27) which are guided on a core tube (21) at different angles to the core axis, complement one another in the injection condition and permit the undercut to be demoulded in the collapsed condition, having a core block (16) which is pivotal about a pivot pin (15) of a core frame (12) and to which a curved core (20) is attached, adjoining a straight core guide (19) on which the core tube (21) of the collapsible core (22) is displaceable, which curved core (20) is concentric to the pivot pin (15) and is supplemented in the injection condition by a straight insertable and retractable core piece (11) to form the actual injection core.

3. An injection mould according to Claim 2, characterized in that the core frame (12) is displaceable in the opening direction of the injection mould.

4. An injection mould according to Claim 2 or 3, characterized in that a cylinder unit (17) actuated by pressurized medium is provided to pivot the core frame (12).

5. An injection mould according to one of Claims 2 to 4, characterized in that a stripper plate (32) is arranged on the core frame (12), the collapsible core reaching through the opening in the stripper plate.

## Revendications

1. Procédé pour le démoulage de corps creux arqués, en matière synthétique, comportant une contre-dépouille interne à une extrémité du corps creux, dans lequel un noyau rétractable (22), pour le moulage de la contre-dépouille interne, qui est guidé par un guidage de noyau rectiligne (19) et qui est constitué par deux groupes de chaque fois n segments rétractables (27) guidés par un tube de noyau (21) selon différents angles par rapport à l'axe de noyau et se complétant à l'état d'injection est amené à un état rétracté pour le démoulage de la contre-dépouille interne, dans lequel ensuite le guidage de noyau (19) est pivoté, avec un noyau arqué qui s'y raccorde, autour du centre de courbure du noyau arqué et dans lequel une pièce de noyau (11) droite qui complète le noyau arqué est retirée.

2. Outil de moulage par injection pour des corps creux arqués (5), en matière synthétique, comportant une contre-dépouille interne à une extrémité du corps creux, comportant un noyau rétractable (22) pour le moulage de la contre-dépouille interne, dans lequel le noyau rétractable est constitué par deux groupes de chaque fois n segments rétractables (27) qui sont guidés par un tube de noyau (21) selon différents angles par rapport à l'axe de noyau, qui se complètent à l'état d'injection et qui, à l'état rétracté, permettent un démoulage de la contre-dépouille, comprenant un bloc de noyau (16) qui peut être pivoté autour d'un axe de pivotement (15) d'un châssis à noyau (12), sur lequel est monté, se raccordant à un guidage de noyau rectiligne (19) sur lequel le tube de noyau (21) du noyau rétractable (22) peut être coulissé, un noyau arqué (20) concentrique à l'axe de pivotement (15) et qui se complète, à l'état d'injection, en un noyau d'injection proprement dit par une pièce de noyau (11) droite qui peut être introduite et retirée.

3. Outil de moulage par injection suivant la revendication 2, caractérisé en ce que le châssis à noyau (12) peut être déplacé en direction de l'ouverture de l'outil de moulage par injection.

4. Outil de moulage par injection suivant la revendication 2 ou 3, caractérisé en ce qu'un ensemble de cylindre (17) actionné par un milieu sous pression est prévu pour le pivotement du châssis à noyau (12).

5. Outil de moulage par injection suivant l'une des revendications 2 à 4, caractérisé en ce qu'une plaque d'éjection (32) à travers le passage de laquelle passe le noyau rétractable est agencée sur le châssis à noyau (12).
